**Europäisches Patentamt**

**European Patent Office**

**Office européen des brevets**

(11) Veröffentlichungsnummer: **0 349 807**

**A2**

## (12) EUROPÄISCHE PATENTANMELDUNG

(21) Anmeldenummer: **89110964.7**

(22) Anmeldetag: **16.06.89**

(51) Int. Cl.⁴: **B29C 45/17**

(30) Priorität: **07.07.88 DE 3822927**
**27.08.88 DE 3829137**

(43) Veröffentlichungstag der Anmeldung:
**10.01.90 Patentblatt 90/02**

(84) Benannte Vertragsstaaten:
**AT CH DE ES FR GB IT LI NL**

(71) Anmelder: **Hehl, Karl**
**Arthur-Hehl-Strasse 32**
**D-7298 Lossburg 1(DE)**

(72) Erfinder: **Hehl, Karl**
**Arthur-Hehl-Strasse 32**
**D-7298 Lossburg 1(DE)**

(74) Vertreter: **Mayer, Friedrich, Dr.**
**Patentanwälte Dr. Mayer & Frank Westliche 24**
**D-7530 Pforzheim(DE)**

(54) **Kunststoff-Spritzgiessmaschine.**

(57) Der quaderförmige Schaltschrank (17) für die elektronische Steuereinrichtung der Spritzgießmaschine bildet mit einem Datensichtgerät (18) und einer Programmtastatur eine bauliche Einheit. Eine durch eine Tür bzw. Abdeckung abgeschirmte Seite ermöglicht als Wartungsseite (17a) die Wartung der Steuereinrichtung. Eine die Programmtastatur (19) und den Bildschirm (18a) desDatensichtgerätes (18) aufweisende Seite bildet eine Bedienungsseite (17d). Der Schaltschrank (17) ist im Bereich einer Stirnkante (16d) des Maschinengestells an der Bedienungs-Längswand des Maschinengestells in konstantem räumlichen Verhältnis zu dieser angeordnet. Die Bedienungsseite (17d) begrenzt einen, etwa im Mittelbereich dieser Bedienungs-Längswand (16a) liegenden, Bedienungs-platz (B), wobei die Wartungsseite (17a) senkrecht zur Bedienungsseite (17d) steht.

An der Spritzgießmaschine befinden sich eine Mehrzahl von elektrischen Verbrauchern, denen elektronisch betätigte Zwischenglieder zur Steuerung und/oder Regelung der Verbraucher und/oder der den Verbrauchern zugeführten Energie entsprechend einem differenzierten, durch Programm bestimmten Zeit- und Spannungsablauf funktionell und räumlich zugeordnet sind und die zu diesem Zweck im Stromkreis der energiezuführenden Leitungen liegen. Im Schaltschrank befindet sich ein Verteiler. Die energiezuführenden Leitungen gehen vom Verteiler aus und die Zwischenglieder befinden sich im Schaltschrank (17). Durch eine solche Ausbildung wird einerseits eine einfache und rasche Wartung der elektronischen Steuereinrichtung und andererseits ein kompendiöser Aufbau der gesamten Spritzgießmaschine erreicht, ohne daß hierfür ein zusätzlicher technischer Aufwand erforderlich wäre.

FIG. 5

## Kunststoff-Spritzgießmaschine.

Die Erfindung bezieht sich auf eine Spritzgießmaschine entsprechend dem Oberbegriff des Patentanspruches 1. Unter Zwischengliedern werden dabei z.B. elektronische Verstärkungs- und Schaltelemente (z.B. Verstärker, Relais, Regeleinrichtungen, Regelventile und dergleichen) verstanden, die über eine Steuerspannung Signale zur Beeinflussung der Energiezufuhr der Verbraucher erhalten. Die Steuerleitung kann also gleichzeitig auch als Signalleitung dienen. Bei den Verbrauchern handelt es sich in erster Linie um magnetbetätigte Ventile im Hydraulikkreislauf sowie um Elektromotoren.
Bei üblichen Spritzgießmaschinen dieser Art (Hauszeitschrift: "Arburg/heute 22/84", S. 5 und 23/85) ist die Bedienungsseite des im Grundriß rechteckigen Schaltschrankes durch eine Türe gebildet, die einen dem Armaturenbrett der Programmtastatur entsprechenden Ausschnit aufweist.

Beim Schließen der Türe legt sich der Rand dieses Ausschnittes dichtend auf den mit Dichtmittel versehenen Rand des Armaturenbrettes der Programmtastatur auf. Die zur Bedienungsseite parallele Rückwand des Schaltschrankes ist ebenfalls durch eine Türe gebildet, um bei der Wartung rückwärtigen Zugang zu den elektronischen Bauteilen der Programmtastatur zu haben. Im übrigen ist das Datensichtgerät in einem Aufsatz des Schaltschrankes angeordnet. Bei einer solchen Ausbildung und Anordnung ist die Programmtastatur vom Bedienungsplatz aus zwar leicht zugänglich und bedienbar, jedoch ist es erforderlich, die parallelen Breitseiten des Schaltschrankes als Türen auszubilden, um bei der Funktionsüberprüfung bzw. Wartung ausreichenden Zugang zu allen elektronischen Bauteilen der Steuerung zu bekommen. Dieser doppelseitige Zugang über zwei breitseitige Türen ist indessen nicht als optimal anzusehen, weil er erhöhte Probleme einer staubsicheren Abdichtung mit sich bringt und außerdem die thermische Abschirmung des Innenraums des Schaltschrankes erschwert. Außerdem ist die die Wartungsarbeiten durchführende Person an der rückwärtigen Türe insbesondere dann in ihrer Bewegungsfreiheit behindert, wenn die Spritzgießeinheit den Schaltschrank in Längsrichtung der Spritzgießmaschine rückseitig überragt und insoweit den Bewegungsspielraum der Wartungsperson einschränkt. Im Falle einer raumsparenden Gruppierung von Spritzgießmaschinen in Spritzgießanlagen wird es überdies oftmals als hinderlich empfunden, wenn der den Bedienungsplatz begrenzende Schaltschrank von der Bedienungslängswand des Maschinengestells aus sich verhältnismäßig weit senkrecht zu dieser Bedienungslängswand erstreckt.

Bekannt ist es auch, den Schaltschrank rückseitig an die Spritzgießmaschine anzubauen und über ein Kabel mit dem im Bereich des Bedienungsplatzes angeordneten Bedienungsterminal zu verbinden, so daß eine Austauschbarkeit der Terminals untereinander und der Einsatz des Terminals mit anderen Maschinen der gleichen Baureihe gleichermaßen gewährleistet ist ("Kunststoffe Plastics 6/83, S. 22-24").

Bei einer bekannten Spritzgießmaschine vergleichbarer Art (DE-OS 36 32 449) ist der vom Datensichtgerät und von der Programmtastatur räumlich getrennte Schaltschrank in geringfügigem Abstand von der Spritzgießmaschine an deren spritzgießseitiger Stirnseite derart angeordnet, daß seine vordere Breitseite bündig ist mit der Bedienungslängsseite des Maschinengestells. Das Datensichtgerät und die zugehörige Programmtastatur sind als bauliche Einheit aus- bzw. einschwenkbar an der Spritzgießmaschine selbst angeordnet.

Die Zwischenglieder sind dabei unmittelbar in der Nähe der Verbraucher angeordnet. Die Montage wird daher durch die Vielzahl der von den Zwischengliedern zum Schaltschrank führenden Steuerleitungen ebenso wie durch die Anbringung der über die Spritzgießmaschine verstreuten Zwischenglieder beeinträchtigt. Überdies kann die Funktionsfähigkeit des Schaltschrankes erst nach Anbau an die Maschine und Verbindung mit allen Zwischengliedern überprüft werden. Dabei ist es auch üblich, die externen Verbraucher teils unmittelbar, teils über den Schaltschrank mit Energie zu versorgen.

Es ist ferner bekannt, einen Schaltschrank so auszubilden, daß er von allen Seiten aus zugänglich ist, wobei zur rascheren Wärmeabführung ein Ventilator und Lüftungsöffnungen vorgesehen sind (US-PS 2,774,808). Eine staubsichere Abschirmung der empfindlichen Bauteile im Schaltschrank kann dabei nicht gewährleistet werden.

Weiterhin werden bei einem bekannten Schaltschrank (DE-GM 17 39 063) die elektronischen magnetischen Regelaggregate, die mit Starkstromschalt- und -antriebsgeräten zusammenarbeiten, in Einschubkästen im Schaltschrank untergebracht. Der Schaltschrank ist über Kabelverbindungen mit der zugeordneten Maschine verbunden und ist von der Eingabeeinheiten getrennt, so daß zusätzliche Verbindungsleitungen erforderlich sind. Geregelt werden unmittelbar die den Regelaggregaten zugeordneten Starkstromelemente im Schaltschrank, jedoch nicht die an den Verbrauchern befindlichen Zwischenglieder.

Im Hinblick auf die zunehmende Bedeutung einer raschen, einfachen und bequemen Wartung bei den im modenen Spritzguß vielfach exponential zunehmenden Steuerungskapazitäten liegt der Erfindung die Aufgabe zugrunde, eine Spritzgießmaschine der Eingangs genannten Art derart weiterzubilden, daß einerseits ihre elektronische Steuereinrichtung rasch und einfach gewartet und andererseits die ganze Spritzgießmaschine kompendiöser aufgebaut werden kann, ohne daß hierfür ein zusätzlicher technischer Aufwand erforderlich ist.

Diese Aufgabe wird erfindungsgemäß durch die im Kennzeichen des Patentanspruches 1 genannten Merkmale gelöst.

Bei einer solchen Ausbildung wird durch die Anordnung des Schaltschrankes bzw. der Zusatzschalt- und Verteilerschränke nach den Ansprüchen 6 bis 11, lediglich Raum in Anspruch genommen, der bereits im Bereich der Maschine durch den Platzbedarf des vor der Maschine angeordneten Bedienungsplatzes freigehalten werden mußte, so daß die erforderlichen Steuerungskapazitäten an der Maschine angebracht werden können, ohne zusätzliche Stellfläche zu benötigen. Zudem kann durch die Anordnung der Zwischenglieder im Schaltschrank die restliche Spritzgießmaschine kompakter aufgebaut werden, da die auch sonst mitunter hinderlichen Zwischenglieder von der Spritzgießmaschine entfernt sind.

Bei dieser Anordnung wird auch die Lebensdauer der Zwischenglieder erhöht, da sie nun im geschützten Schaltschrank angeordnet sind. Diese Anordnung erlaubt weiter die Endmontage des Schaltschrankes durch ungeschultes Personal, da Fehlanschlüsse leicht zu vermeiden sind, so daß auch Folgeschäden wirksam vermieden werden können.

Vor allem bei größeren Anlagen mit mehreren aneinandergereihten Spritzgießmaschinen hat die Anordnung des Schaltschrankes bzw. der weiteren Schaltschränke nach den Ansprüchen 6 bis 11 an der Bedienungslängswand den Vorteil, daß das Bedienungspersonal nicht in den Gefahrenbereich hinter der Maschine gelangt, in dem programmgesteuerte Transportwagen zum Transport von Spritzlingen, Werkzeugen und ähnlichem laufen, so daß eine Maschine ohne weiteres gewartet werden kann, ohne daß die Anlage stillgelegt werden muß. Bei einer solchen Ausbildung kann z.B. auch das Wartungspersonal bei Großanlagen zur Wartung mit einem Wartungsfahrzeug an den Schaltschränken entlangfahren, ohne daß der Betrieb unterbrochen werden muß.

Durch die Anordnung der Bedienungsseite des Schrankes neben dem Bedienungsplatz wird eine Bedienung auf ergonomische Weise ermöglicht, wobei die Bedienungsperson sich stets in einem geschützten, seitlich abgeschirmten Bereich befindet. Die Anordnung von Datensichtgerät und Programmtastatur an der Schmalseite des Schaltschrankes erleichtert nicht nur die Bedienung der Maschine, sondern führt auch zu einem verringerten Platzbedarf der Spritzgießmaschine, da der Schaltschrank nur so weit von der Bedienungslängswand hervorragt, wie es die Baubreite des Datensichtgerätes erfordert.

Die Wartung wird vereinfacht, da die Zwischenglieder nicht mehr über die Maschine verteilt sind, sondern zentral im Schaltschrank zugänglich sind.

Eine solche Ausbildung hat zudem den Vorteil, daß die Spritzgießmaschine entsprechend den spezifischen Bedürfnissen des Kaufinteressenten bzw. Kunden und dessen finanziellen Möglichkeiten in unterschiedlichen Automatisierungsstufen ausgeliefert werden kann, die je eine unterschiedliche Steuerungskapazität voraussetzen. In diesem Sinne kann die Spritzgießmaschine ohne oder mit einer Einrichtung zur unmittelbaren, schonenden Entnahme der Spritzlinge aus der geöffneten Spritzgießform, deren Ablage in Paletten und Einrichtungen zum Abtransport der Paletten bzw. ohne und mit weiteren Peripheriegeräten ausgeliefert werden. Dank einer modularen Bauweise sind die einzelnen Automatisierungsgrade ohne großen Montageaufwand steuerungstechnisch ineinander überführbar. Dabei schafft die erfindungsgemäße Ausbildung die prinzipielle Voraussetzung für eine Verdoppelung der Steuerkapazität ohne wesentliche Erhöhung der Fertigungskosten, indem zwei in ihren Abmessungen identische Schaltschränke symmetrisch zu einer vertikalen, quer zur Schließeinrichtung der Formschließeinheit stehenden Mittelebene der Spritzgießmaschine in gleichartiger Anordnung (entsprechend den Ansprüchen 10 und 11) vorgesehen sind, wobei der zweite, z.B. die Steuereinrichtung für das Handling enthaltende Schaltschrank mit oder ohne Bedienungstastatur sein kann. Insoweit ist die dem Bedienungsplatz zugewandte Schmalseite (33d) eine 'potentielle' Bedienungsseite des Schaltschrankes. Im übrigen führt eine solche Erhöhung der Steuerkapazität auf der Grundlage zweier Schaltschränke zu einem eigentümlichen Maschinendesign. Dies gilt insbesondere dann, wenn die beiden Schaltschränke farblich gegenüber dem Maschinengestell abgehoben sind. Wenn bei höchstem Automatisierungsgrad und maximalen Sonderleistungen der Spritzgießmaschine die erforderlichen Steuerungskapazitäten zu konkreten baulichen Schaltschrankeinheiten zusammengefaßt sind, ist die Nachrüstung oder Umrüstung der Spritzgießmaschine mit einem sehr geringem Montage- und Überprüfungsaufwand verknüpft.

In diesem Falle liegt bereits vor dem Anbau der Schaltschränke die Möglichkeit vor, die im Schaltschrank enthaltene elektronische Steuereinrichtung als solche an einer Testmaschine oder an einem Computer zur Simulation anzuschließen. Dabei können sowohl die üblichen Spritzzyklen, als auch z.B. eine fehlerhafte Handlung des Bedienungspersonals simuliert werden, so daß die ganzen Funktionen vor Anbau der Schaltschränke an die Maschine getestet werden können. Der Anbau als solcher und die erforderlichen Anschlußarbeiten sind insofern wesentlich vereinfacht, als nur noch die energiezuführenden Leitungen, ausgehend vom Schaltschrank mit den Verbrauchern verknüpft werden müssen. Auch bei späteren Störfällen nach Übergabe der Maschine läßt sich die Fehlersuche erheblich vereinfachen, da schnell festgestellt werden kann, ob der Fehler im Schaltschrank oder an einem der Verbraucher liegt. Im Falle eines größeren Schadens kann der Schaltschrank bei geringer Betriebsausfallzeit problemlos gegen einen identischen Ersatz-Schaltschrank ausgetauscht werden. Im übrigen bietet die Anordnung der Zwischenglieder im Schaltschrank einen wesentlichen Anreiz für einen unmittelbaren Anbau des Schaltschrankes an die Spritzgießmaschine, da dann das den Schaltschrank verlassende Bündel der energiezuführenden Leitungen bei konstanter räumlicher Anordnung wesentlich verkürzt wird.

Während der Montage werden die Anschlußarbeiten wesentlich vereinfacht, da nur noch die energiezuführenden Leitungen, ausgehend vom Schaltschrank mit den Verbrauchern verknüpft werden müssen, was zur Verringerung fehlerhafter Anschlüsse beiträgt. Der Nachteil der längeren energiezuführenden Leitung wird dabei bewußt in Kauf genommen.

Bei einer Ausbildung gemäß Patentanspruch 2 wird zudem der Schaltschrank dem Wartungspersonal leichter zugänglich, da er sich nun in einer für das Wartungspersonal angenehmen Arbeitshöhe befindet. In den Zwischenraum zwischen Spritzgießmaschine und Schaltschrank kann bequem ein Schutzschieber eingefahren werden. Durch die freitragende Anordnung können auch die erforderlichen Reinigungsarbeiten leichter durchgeführt werden, da die Schaltschränke keine Stellfläche auf dem Boden benötigen.

Die Verteilerschränke nach einer Ausbildung gemäß den Ansprüchen 8 oder 9 haben nur eine logische Verbindung zum Schaltschrank, über die ihnen Steuersignale erteilt werden. Ansonsten haben sie eine unabhängige Stromversorgung, so daß eine Überlastung des Schaltschrankes durch willkürliches Anschließen weiterer Peripheriegeräte an die Stromversorgung des Schaltschrankes zuverlässig unterbunden wird. Dadurch verschwinden auch die mancherorts üblichen Verteiler aus dem Umfeld der Spritzgießmaschine, die gefährliche Stolperfallen bilden. Die periphere Situation der Spritzgießmaschine wird geordnet.

Nachstehend wird die Erfindung anhand der Zeichnungen näher erläutert. Es zeigen:

Fig. 1,2 Die Spritzgießmaschine in Seitenansicht und Draufsicht,

Fig. 3 die Spritzgießmaschine aus stirnseitiger Blickrichtung in vergrößerter Darstellung,

Fig. 4,5 eine Variante der Spritzgießmaschine in einer den Figuren 1,2 entsprechenden Darstellung,

Fig. 6 die Variante der Spritzgießmaschine aus einer Fig. 3 entgegengesetzten stirnseitigen Blickrichtung in vergrößerter Darstellung,

Fig. 7,8 eine weitere Variante der Spritzgießmaschine in einer den Figuren 1,2 entsprechenden Darstellung,

Fig. 9,10 die weitere Variante der Spritzgießmaschine aus entgegengesetzten stirnseitigen Blickrichtung in vergrößerter Darstellung und

Fig. 11,12 Schematas zur räumlichen Positionierung von Zwischengliedern der Spritzgießmaschine bei vom Maschinengestell abgetrennten bzw. angebautem Schaltschrank.

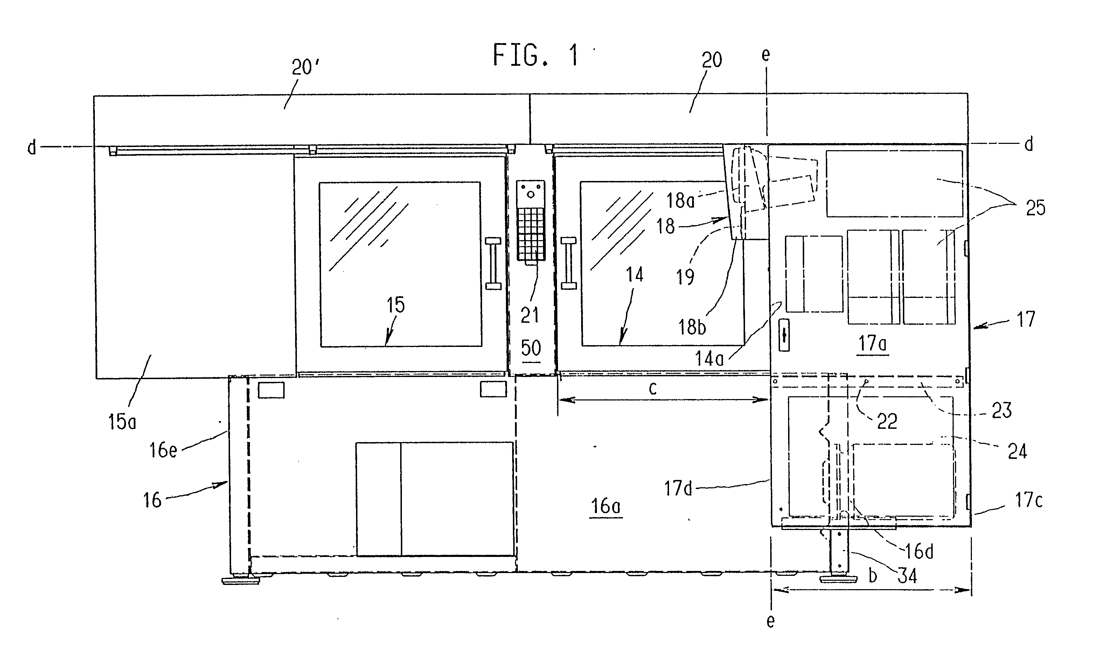

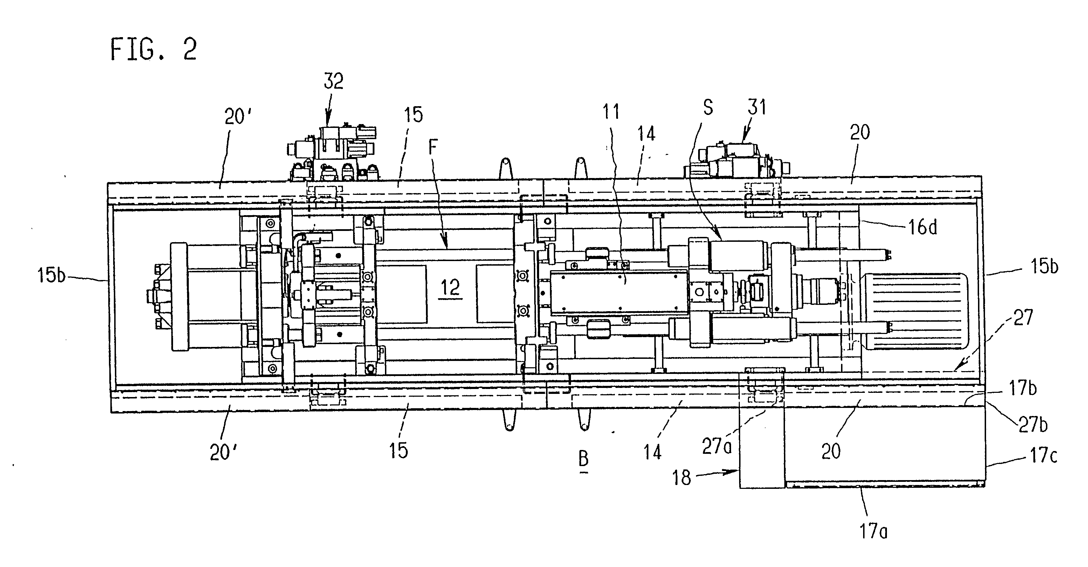

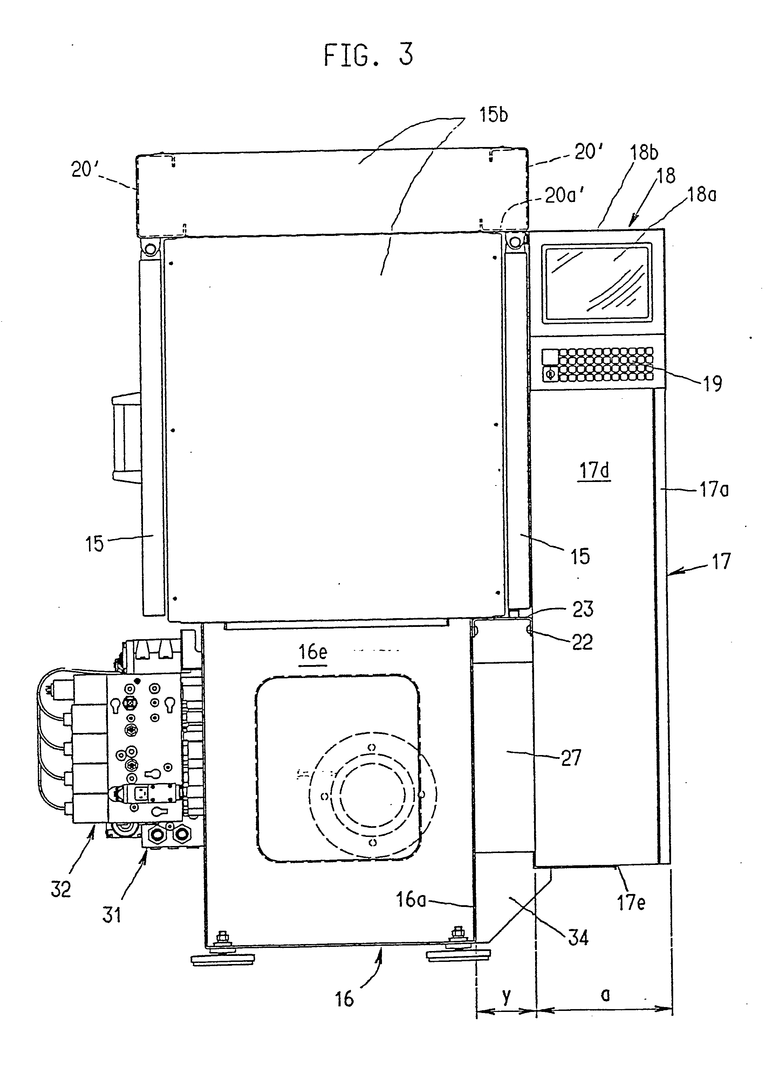

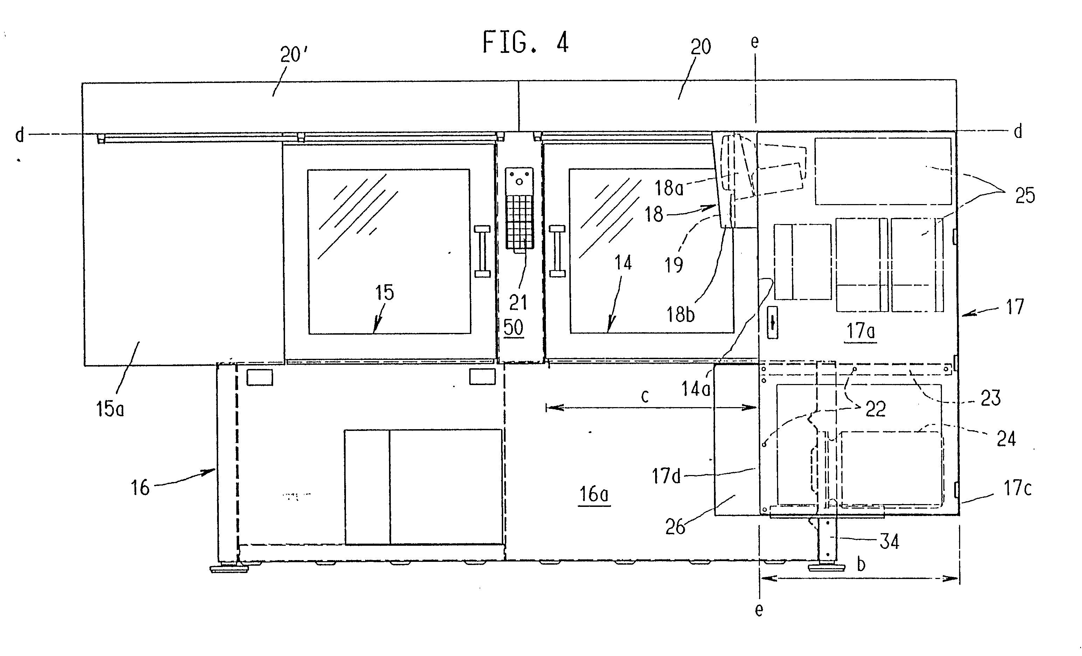

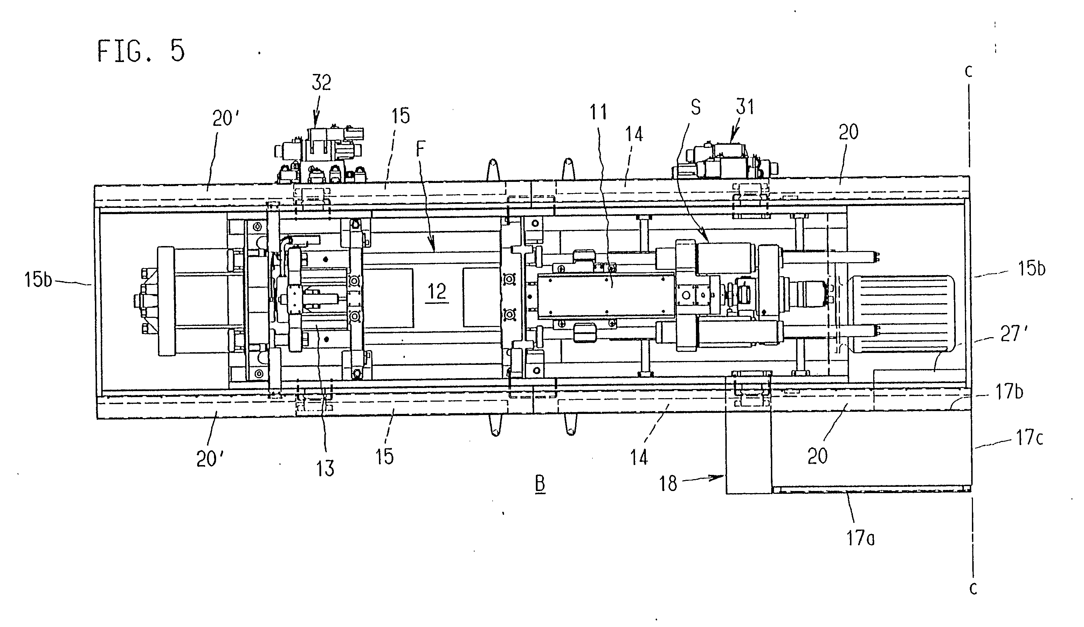

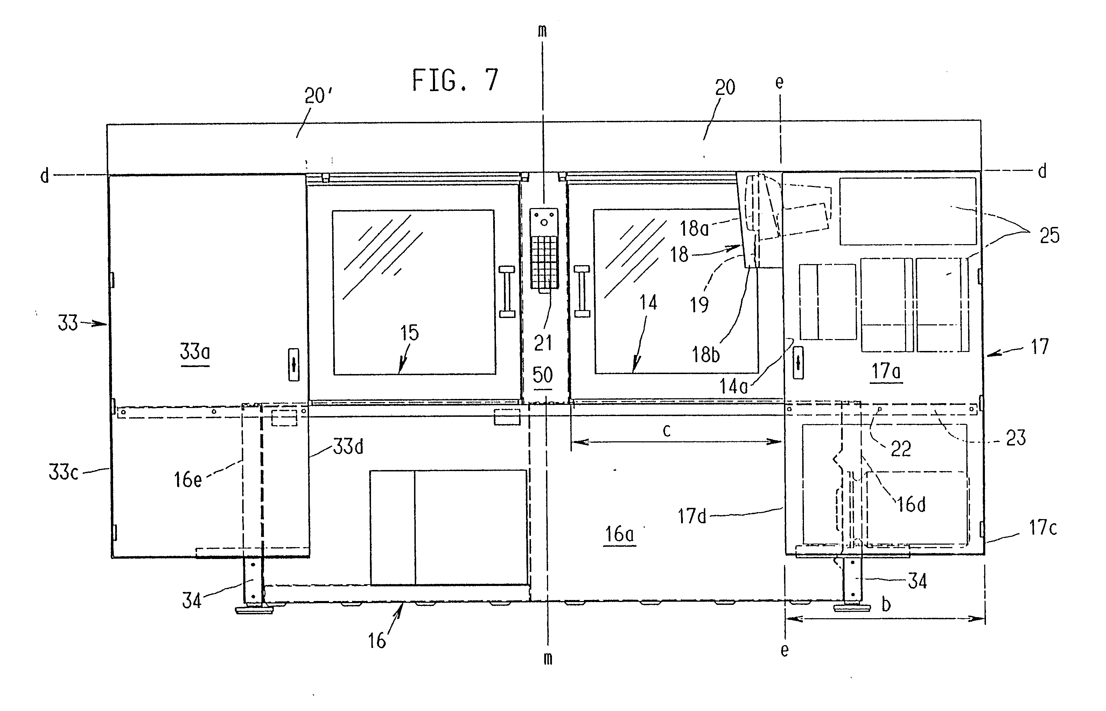

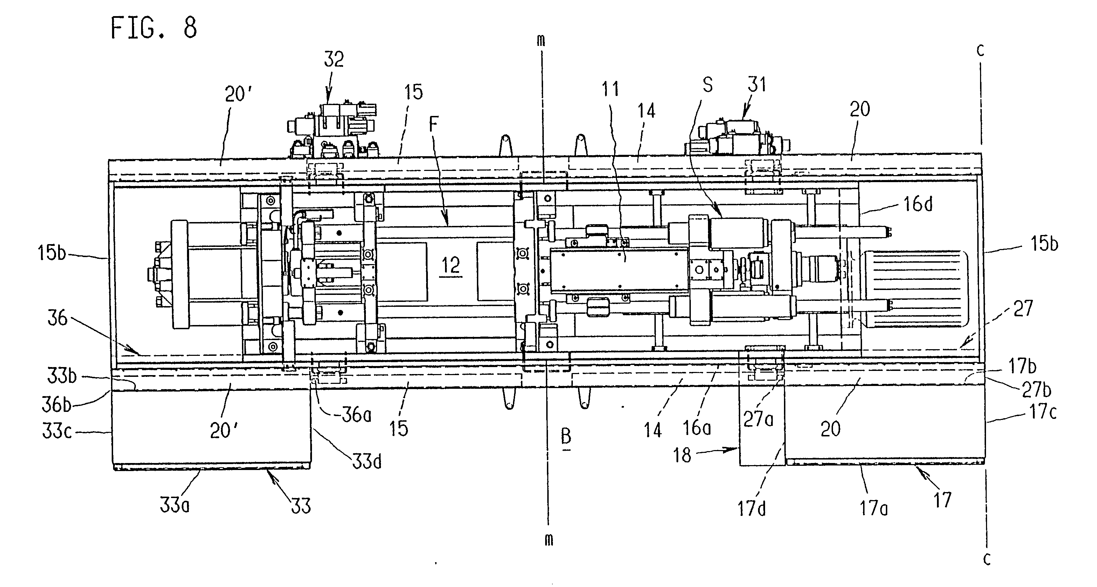

Die Spritzgießmaschine hat ein Maschinengestell 16 mit etwa rechteckiger Stellfläche. Auf dem Maschinengestell 16 sind eine Formschließeinheit F und eine Spritzgießeinheit S abgestützt. Am Maschinengestell 16 ist ein etwa quaderförmiger Schrank (Schaltschrank 17) frei tragend angebaut, welcher die elektronische Steuereinrichtung zur Steuerung der Spritzzyklen enthält. Der Schaltschrank 17 bildet mit einem Datensichtgerät 18 und einer Programmtastatur 19 eine bauliche Einheit. Eine Breitseite des Schaltschrankes 17 ist durch eine Türe gebildet, die den Zugang zu den elektronischen Bauteilen ermöglicht. Diese Breitseite wird im folgenden als Wartungsseite 17a bezeichnet. In die einen Bedienungsplatz B begrenzende Schmalseite des Schaltschrankes 17 sind eine Programmtastatur 19 und der Bildschirm 18a des Datensichtgerätes 18 integriert. Diese Schmalseite wird daher im folgenden als Bedienungsseite 17d bezeichnet. Der Schaltschrank 17 ist im Bereich einer Stirnkante 16d des Maschinengestells 16 an der Bedienungslängswand 16a des Maschinengestells 16 in konstantem räumlichen Verhältnis zu dieser Bedienungslängswand 16a angeordnet. Die vertikalen, den Plastifizierzylinder 11 und den Formspannraum 12 der Formschließeinheit F bedienungsseitig abdeckenden Schutzschieber 14,15 schließen mit ihren einander zugewandten Stirnkanten an ein mittiges stationäres Abdeckungselement 50 (Fig. 1,5) an, an welchem eine Eingriffstastatur 21 für unmittelbare Eingriffe in die Spritzzyklen angeordnet ist. Die Schutzschieber 14,15 sind in gegensätzlicher Richtung aus ihrer Abdeckposition heraus verfahrbar. Der Bedienungsplatz B ist maschinenseitig von der Bedienungslängswand 16a und den Schutzschiebern 14,15 sowie seitlich durch die Bedienungsseite 17d des Schaltschrankes begrenzt. Diese Bedienungsseite 17d schließt rechtwinklig im Bereich der Stirnkante 14a des den Plastifizierzylinder 11 abdeckenden Schutzschiebers 14 an. Hinter dem Schaltschrank ist ausreichend Platz, um den Schutzschieber 14 bei Überführung außer Schutzposition mit Spiel einzufahren. Denn der Schaltschrank 17 ist unter Wahrung eines Abstandes y zur Bedienungslängswand 16a am Maschinengestell 16 mittels Stützelementen 34 frei tragend abgestützt. Dabei greifen die Stützelemente 34 an der Unterseite 17e des Schaltschrankes an. In Höhe der Oberseite 16c (Fig. 4) des Maschinengestells ist der Schaltschrank mittels Befestigungsschrauben 22 über Distanzprofile 23 an der Bedienungslängswand 16a befestigt. Die Breite b der Wartungsseite 17a des Schaltschrankes 17 entspricht etwa der Abmessung c eines Schutzschiebers 14 oder 15. Die Schutzschieber hängen an Profilschienen 20,20', die oberhalb dieser Schutzschieber angeordnet und auf dem Maschinengestell 16 abgestützt sind. Dabei liegt ein unterer horizontaler Schenkel 20a bzw. 20a' (Fig. 3,7) mit der Oberseite des Datensichtgerätes 18 und der Oberseite des Schaltschrankes in einer horizontalen Ebene d-d (Fig. 1,8). Die Profilschienen 20,20' sind über stationäre stirnseitige Schutzabdeckungen 15b miteinander verbunden. Im Ausführungsbeispiel der Fign.1-3 ist der rückwärtige Teil der Formschließeinheit F mittels einer stationären vertikalen Schutzabdeckung 15a (Fig.1) abgeschirmt. Die Tiefenabmessung a der Bedienungsseite 17d entspricht der durch die Breite von Datensichtgerät 18 und Programmtastatur 19 vorgegebenen Minimalbreite. Die durch einen Blendschutz 18b geschützte Sichtfläche des Datensichtgerätes 18 tritt aus der Bedienungsseite 17d des Schaltschrankes hervor. Sie befindet sich dabei in einem Abstand von der Ebene e-e (Fig. 1,8) der Bedienungsseite 17d, der etwa einem Sechstel der Abmessung b der Wartungsseite 17a entspricht.

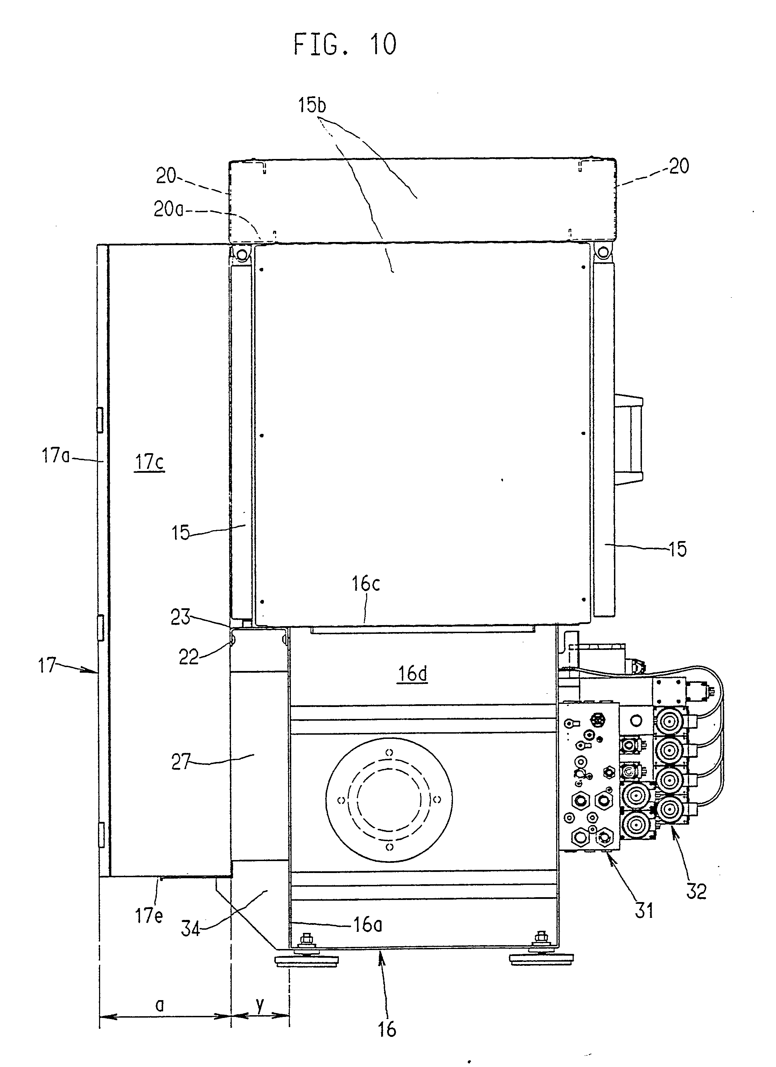

In der Variante der Figuren 7-10 ist ein im Bereich der anderen Stirnseite 16e des Maschinengestells 16 an die Bedienungslängswand 16a angebauter weiterer Schaltschrank 33 vorgesehen. Er enthält im Konkreten Ausführungsbeispiel die elektronische Steuereinrichtung H für eine Einrichtung zur Entnahme der Spritzteile aus der geöffneten Spritzgießform sowie für eine schonende Ablage dieser Spritzteile in einer Palette und für eine Transporteinrichtung zum Abtransport der gefüllten Paletten. Der weitere Schaltschrank 33 weist wie der Schaltschrank 17 eine parallel zur Bedienungslängswand 16a verlaufende Wartungsseite 33a und eine senkrecht zur Wartungsseite stehende, den Bedienungsplatz B begrenzende Bedienungsseite 33d auf. Letztere schließt ebenfalls rechtwinklig an den benachbarten Schutzschieber 15 an. Der weitere Schaltschrank 33 weist Abmessungen auf, die identisch sind mit den Abmessungen des Schaltschrankes 17. Beide Schaltschränke 17,33 sind symmetrisch zu einer quer zur Schließrichtung der Formschließeinheit F stehenden vertikalen Mittelebene m-m der Spritzgießmaschine angeordnet. Die vom Bedienungsplatz B abgewandten rückwärtigen Schmalseiten 17c,33c der Schaltschränke 17,33 liegen in einer vertikalen Ebene, in welcher die die Schutzschieber 14,15 tragenden Profilschienen 20,20' enden. Selbstverständlich können die beiden Schaltschränke 17, 33 miteinander vertauscht werden bzw. ein Schaltschrank 17 wahlweise im Bereich der einen 16d oder anderen Stirnkante 16e angeordnet werden.

Zwischen der rückwärtigen Breitseite 17b bzw. 33b des Schaltschrankes 17 bzw. 33 und der Bedienungslängswand 16a des Maschinengestells 16 kann ein quaderförmiger Verteilerschrank 27 bzw. 36 eingefügt sein. Wie aus Fig. 8 ersichtlich, sind dessen Schmalseiten 27a,27b bzw. 36a,36b bündig mit der Bedienungsseite 17d bzw. 33d und der rückwärtigen Schmalseite 17c bzw. 33c des Schaltschranks.

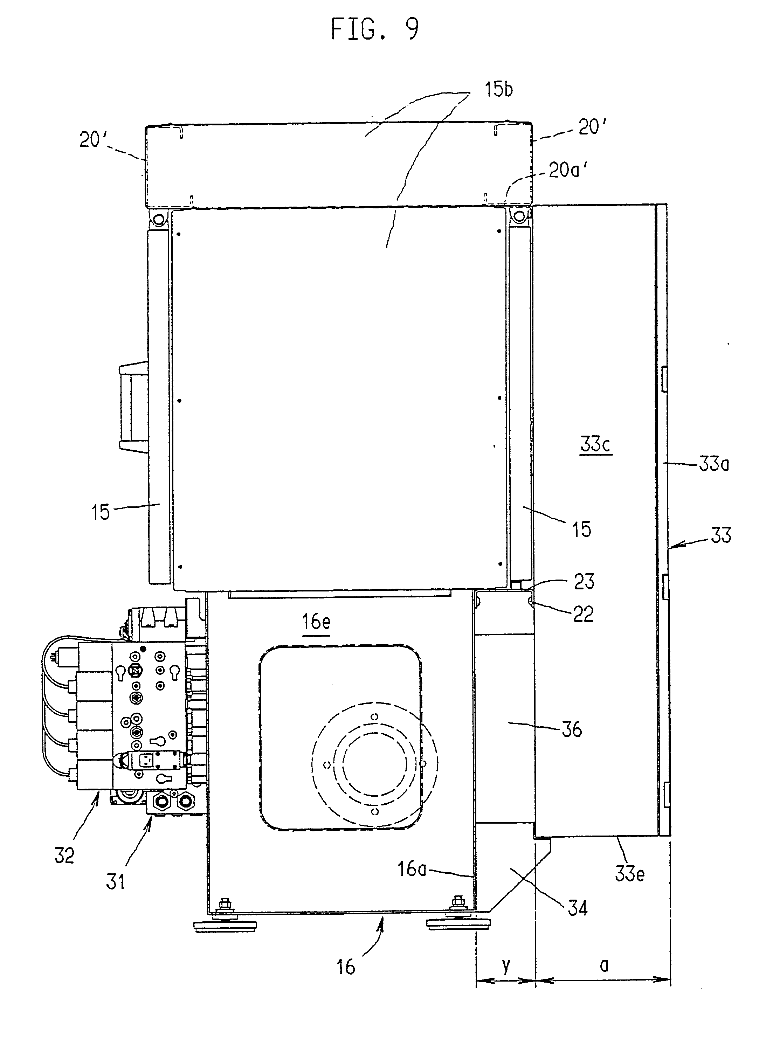

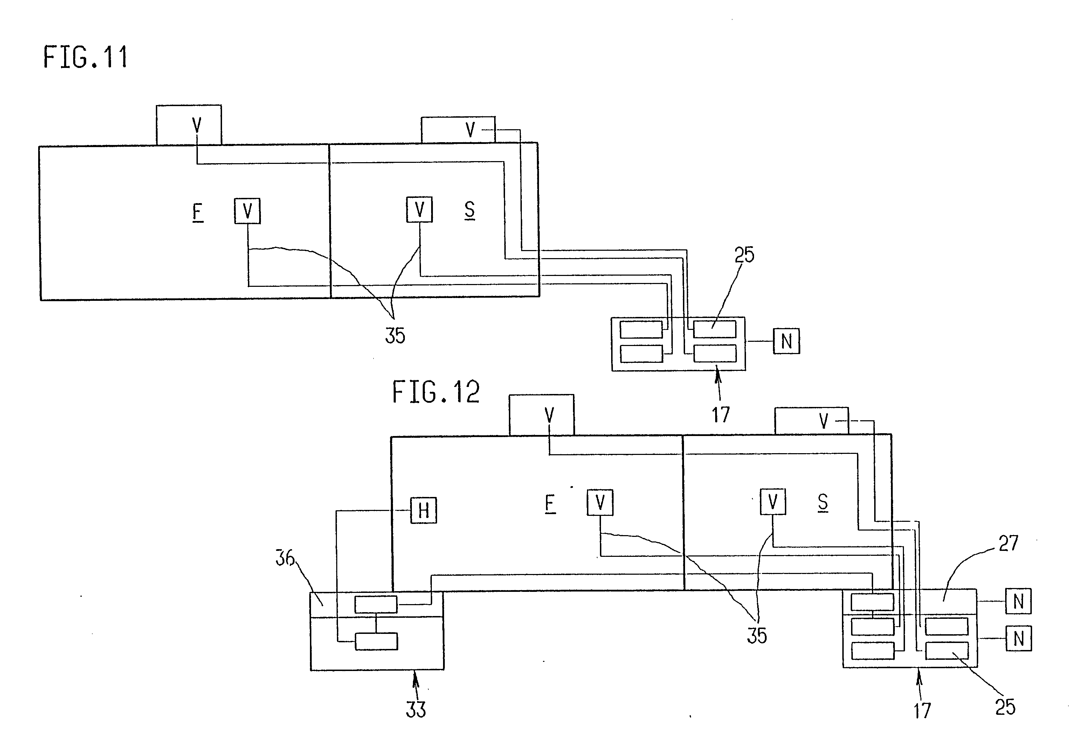

Im Schaltschrank 17 und/oder im weiteren Schaltschrank 33 und/oder in einem oder mehreren Verteilerschränken 27,36 sind elektronische Zwischenglieder 25, z.B. Verstärker, Relais und dergleichen angeordnet. Der den Verbrauchern V zufließende Strom wird durch diese Zwischenglieder 25 beeinflußt. Sie erhalten ihre Steuersignale über Steuerleitungen und regeln die den Verbrauchern zufließende Energie. Dabei stehen sie sowohl mit den Steuerleitungen als auch mit den energiezuführenden Leitungen 35 in Verbindung. Die Figuren 11 und 12 zeigen schematisch die vorteilhafte Anordnung von Zwischengliedern 25 im Schaltschrank 17 und/oder dem weiteren Schaltschrank 33 und/oder einem oder mehreren Verteilerschränken 27,36. Nur der bereits von den Zwischengliedern 25 beeinflußte Strom fließt durch die energiezuführenden Leitungen 35 den Verbrauchern, wie z.B. den Hydraulikblöcken 31,32 zu. Der Anbau des Schaltschrankes 17 und/oder des weiteren Schaltschrankes 33 und/oder eines oder mehrerer Verteilerschränke 27,36 an der Spritzgießmaschine, wie schematisch in Fig. 9 dargestellt, führt rein statistisch betrachtet, zu einer erheblichen Verkürzung des Bündels energiezuführender Leitungen 35, die den Schaltschrank verlassen. Der Verteilerschrank 27 besitzt dabei ebenso wie der Schaltschrank 25 einen eigenen Netzanschluß N. Unter dem hier verwendeten Begriff "Steuerleitungen" sind auch Signalleitungen zu Endschaltern an Signalgeräten zu verstehen. Die Schaltschränke 17,33 können auch mehr als nur eine Wartungsseite aufweisen. Der Verteilerschrank 36 wird vom Verteilerschrank 27 mit Energie versorgt und versorgt seinerseits den Zusatzschaltschrank 33 mit Energie.

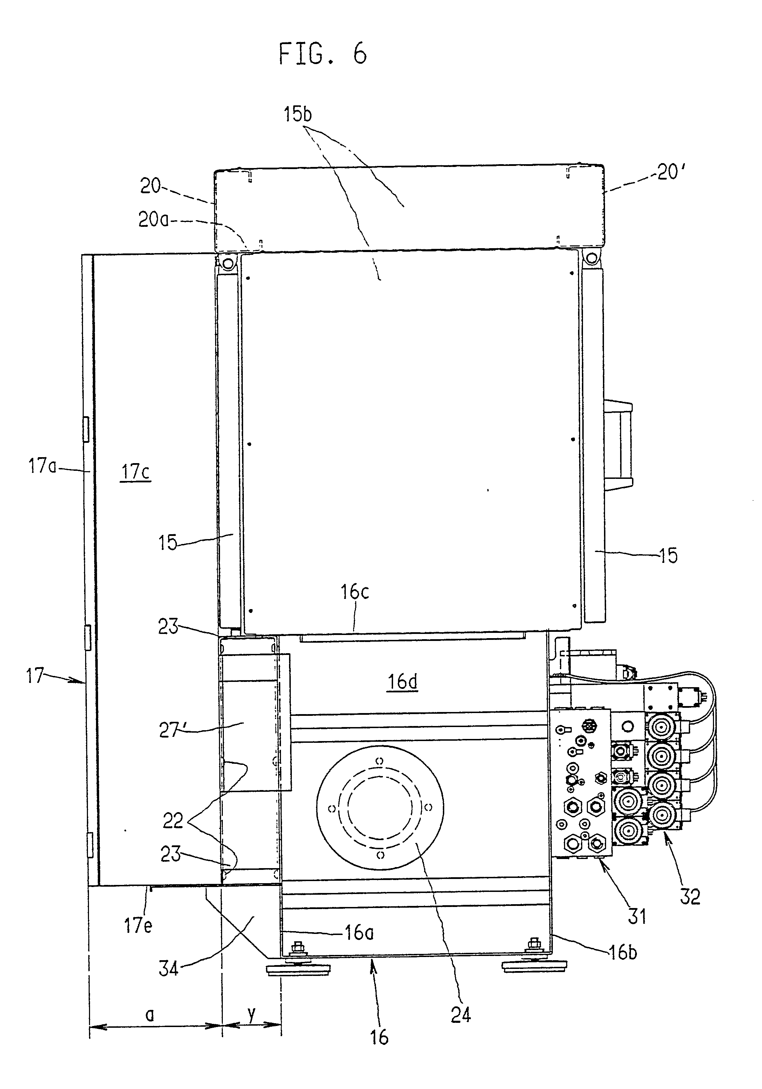

In der Variante der Figuren 4-6 kann an den Schaltschrank 17 bedarfsweise wenigstens einer der Zusatzschaltschränke 26, 27' angebracht werden. Der erste Schaltschrank 26 nimmt dabei die Zwischenglieder und Steuerungsteile des Handlings H auf. Der Verteilerschrank 27' dient (wie auch die vorherigen Verteilerschränke 27 und 36) zum Anschluß weiterer Peripheriegeräte. Er ist nur über eine logische Verbindung mit dem Schaltschrank verknüpft und erhält also nur einfache Steuersignale vom Schaltschrank 17. Seine Stromversorgung ist vom Rest der Spritzgießmaschine unabhängig. Der erste Zusatzschaltschrank 26 ist derart auf der Bedienungsseite 17d anbringbar, daß er innerhalb der vertikalen Projektion des Blendschutzes 18b des Datensichtgeräts 18 liegt und somit keine zusätzliche Stellfläche beansprucht. Seine Lage an der Bedienungsseite 17d entspricht der um den Abstand y erhöhten Tiefenabmessung a des Schaltschrankes 17.

Auch der Verteilerschrank 27' ist so angeordnet, daß er keine zusätzliche Stellfläche beansprucht. Er ist an der rückseitigen Breitseite 17b des Schaltschrankes innerhalb des von Maschinengestell 16, Schaltschrank 17 und Motor 24 begrenzten Raumes angebracht (Fig. 4). Dabei liegt er zwischen der durch die Oberseite 16c des Maschinengestells 16 festgelegten und der durch die Unterseite 17e des Schaltschrankes 17 festgelegten Ebene. Er befindet sich dabei nahezu an der oberen Ebene, während er zur unteren Ebene und zum Motor 24 einen Abstand wahrt. Der Verteilerschrank 27' schließt bündig mit der rückseitigen Schmalseite 17c des Schaltschrankes 17 und mit dem rückwärtigen stirnseitigen Schutz 15b ab. Der Schaltschrank 17 überragt den stirnseitigen hinteren Abschluß 16d des den Ölraum aufnehmenden Maschinengestelles 16 rückseitig mit 2/3 seiner Länge. Programmtastatur 19 und Datensichtgerät 18 sind im Schaltschrank angeordnet. Der Verteilerschrank 27' besitzt dabei ebenso wie der Verteilerschrank 27 des vorherigen Ausführungsbeispieles einen eigenen Netzanschluß.

**Ansprüche**

1. Kunststoff-Spritzgießmaschine (Spritzgießmaschine) mit einem Maschinengestellt (16), auf welchem eine Formschließeinheit (F) und eine Spritzgießeinheit (S) abgestützt sind, und mit wenigstens einem etwa quaderförmigen Schaltschrank (17), welcher die elektronische Steuereinrichtung zur Steuerung der Spritzzyklen enthält und welcher mit einem Datensichtgerät (18) und einer Programmtastatur (19) eine bauliche Einheit mit wenigstens einer durch eine Türe bzw. Abdeckung abgeschirmten Seite (Wartungsseite 17a) und mit einer die Programmtastatur (19) und den Bildschirm (18a) des Datensichtgerätes (18) aufweisenden Bedienungsseite (17d) bildet und welcher Schaltschrank (17) ferner im Bereich einer Stirnkante (16d) des Maschinengestells (16) derart an der Bedienungslängswand (16a) des Maschinengestells (16) in konstantem räumlichen Verhältnis zu dieser Bedienungslängswand (16a) angeordnet ist, daß seine Bedienungsseite (17d) einen etwa im Mittelbereich dieser Bedienungslängswand (16a) liegenden Bedienungsplatz (B) seitlich begrenzt, wobei die Bedienungsseite (17d) des Schaltschrankes (17) etwa rechtwinklig an die Bedienungswand des Maschinengestells anschließt, mit einer Mehrzahl von elektrischen Verbrauchern (V), insbesondere magnetbetätigten Ventilen, Elektromotoren und dergleichen, an der Spritzgießmaschine, welchen Verbrauchern (V) elektronisch betätigte Zwischenglieder (z.B. Verstärker, Relais, elektronische Regeleinrichtungen, Regelventile und dergleichen 25) zur Steuerung und/oder Regelung der Verbraucher und/oder der den Verbrauchern zugeführten Energie entsprechend einem differenziertem, durch Programm bestimmten Zeit- und Spannungsablauf funktionell und räumlich zugeordnet sind und zu diesem Zweck im Stromkreis der energiezuführenden Leitungen (35) liegen, sowie mit einem im Schaltschrank angeordneten Verteiler, gekennzeichnet durch eine derartige Ausbildung des Schaltschrankes (17), daß eine Wartungsseite (17a) senkrecht zur schmalseitigen Bedienungsseite (17d) des Schaltschrankes (17) steht, daß die energiezuführenden Leitungen (35) vom Verteiler ausgehen und daß die Zwischenglieder (25) im Schaltschrank (17) angeordnet sind.

2. Spritzgießmaschine nach Patentanspruch 1, dadurch gekennzeichnet, daß die Breitseiten des an der Bedienungslängswand (16a) frei tragend angebauten Schaltschrankes (17) parallel zur Bedienungslängswand (16a) verlaufen und daß die die Bedienungsseite (17d) bildende Schmalseite des Schaltschrankes (17) rechtwinklig an die Stirnkante (14a) eines benachbarten, den Plastifizierzylinder (11) der Spritzgießeinheit (S) abdeckenden Schutzschiebers (14) anschließt.

3. Spritzgießmaschine nach einem der vorhergehenden Patentansprüche, dadurch gekennzeichnet, daß der Schaltschrank (17) unter Wahrung eines etwa der halben Abmessung (a) der Bedienungsseite (17d) entsprechenden Abstandes (y) zur Bedienungslängswand (16a) am Maschinengestell (16) angeordnet und der benachbarte Schutzschieber (14) hinter den Schaltschrank (17) mit Spiel einfahrbar ist.

4. Spritzgießmaschine nach einem der vorhergehenden Patentansprüche, dadurch gekennzeichnet, daß die Sichtfläche des Bildschirmes (18a) des Datensichtgerätes (18) und die Programmtastatur (19) sich nahezu über die ganze Abmessung der Bedienungsseite (17d) des Schaltschrankes (17) erstrecken.

5. Spritzgießmaschine nach einem der vorhergehenden Patentansprüche, dadurch gekennzeichnet, daß die Sichtfläche des Bildschirmes (18a) des aus der Bedienungsseite (17d) des Schaltschrankes (17) Datensichtgerätes (18) sich in einem Abstand von der Ebene (e-e) dieser Bedienungsseite befindet, der etwa einem Sechstel der Abmessung (b) der Wartungsseite (17a) des Schaltschrankes entspricht, die (b) ihrerseits etwa der Abmessung (c) des Schutzschiebers (14) entspricht, welcher an einer Profilschiene (20) hängt, deren Unterseite (Schenkel 20a) mit der Oberseite des Datensichtgerätes (18) und des Schaltschrankes (17) in einer horizontalen Ebene (d-d) liegt, und daß der Schaltschrank (17) die zugehörige Stirnseite (16d) in Längsrichtung der Spritzgießmaschine mehr als um die Hälfte seiner Abmessung (b) überragt.

6. Spritzgießmaschine nach einem der vorhergehenden Patentansprüche, dadurch gekennzeichnet, daß bedarfsweise wenigstens ein Zusatzschaltschrank (26,27,33,36) für spezielle Anwendungen am bestehenden Schaltschrank (17) und/oder an der Spritzgießmaschine anbringbar ist.

7. Spritzgießmaschine nach Patentanspruch 6, dadurch gekennzeichnet, daß ein erster Zusatzschaltschrank (26) derart auf der Bedienungsseite (17d) des Schaltschrankes (17) anbringbar ist, daß er innerhalb der vertikalen Projektion des Blendschutzes (18b) des Datensichtgerätes (18) liegt und seine Länge die um den Abstand (y) erhöhte Tiefenabmessung (a) der Bedienungsseite (17d) aufweist.

8. Spritzgießmaschine nach Patentanspruch 6 oder 7, dadurch gekennzeichnet, daß zwischen der rückwärtigen Breitseite (17b,33b) des Schaltschrankes (17,33) und der Bedienungslängswand (16a) des Maschinengestells (16) ein quaderförmiger Verteilerschrank (27,36) eingefügt ist, dessen Schmalseiten (27a,27b;36a,36b) bündig sind mit der Bedienungsseite (17d bzw. 33d) bzw. der rückwärtigen Schmalseite (17c,33c) des Schaltschrankes (17,33).

9. Spritzgießmaschine nach Patentanspruch 6 oder 7, dadurch gekennzeichnet, daß ein quaderförmiger Verteilerschrank (27′) an der rückwärtigen Breitseite (17b) des Schaltschrankes (17) anbringbar ist und innerhalb des vom Maschinengestell (16), Schaltschrank (17) und Motor (24) begrenzten Raumes eingefügt ist, wobei er im oberen Bereich zwischen der durch die Oberseite (16c) des Maschinengestells (16) festgelegten Ebene und der durch die Unterseite (17e) des Schaltschrankes (17) festgelegten Ebene hinter dem stirnseitigen hinteren Abschluß (16d) des Maschinengestells (16) im Abstand vom Motor (24) liegt.

10. Spritzgießmaschine nach einem der Patentansprüche 6 bis 9, dadurch gekennzeichnet, daß ein im Bereich der anderen Stirnseite (16e) des Maschinengestells (16) an die Bedienungslängswand (16a) angebauter weiterer Schaltschrank mit elektronischen Steuereinrichtung für periphere Zusatzgeräte (z.B. der Steuereinrichtung H für das Handling) ebenfalls eine parallel zur Bedienungslängswand (16a) des Maschinengestells (16) verlaufende Wartungsseite (33a) und eine senkrecht zur Wartungsseite (33a) stehende, den Bedienungsplatz (B) begrenzende, Bedienungsseite (33d) aufweist, die rechtwinklig an den benachbarten Schutzschieber (15) anschließt.

11. Spritzgießmaschine nach Patentanspruch 10, dadurch gekennzeichnet, daß der Schaltschrank (17) und der weitere Schaltschrank (33) identische Abmessungen aufweisen und symmetrisch zu einer quer zur Schließrichtung der Formschließeinheit (F) stehenden vertikalen Mittelebene (m-m) der Spritzgießmaschine liegen, wobei die vom Bedienungsplatz (B) abgewandten rückwärtigen Schmalseiten (17c,33c) der Schaltschränke (17,33) in einer vertikalen Ebene liegen, in welcher die die Schutzschieber (14,15) tragenden Profilschienen (20,20′) enden.

12. Spritzgießmaschine nach einem der vorhergehenden Patentansprüche, dadurch gekennzeichnet, daß die elektronischen Zwischenglieder (25) in dem Schaltschrank (17) und/oder dem Zusatzschaltschrank (33) und/oder in einem oder mehreren Verteilerschränken (27,27′,36) angeordnet sind, wobei die energiezuführenden Leitungen (35) von einem am Schaltschrank (17) bzw. in den Zusatz- (33) oder den Verteilerschränken (27,27′,36) angeordneten Verteiler ausgehen.

FIG. 1

FIG. 2

EP 0 349 807 A2

# FIG. 3

FIG. 4

FIG. 5

EP 0 349 807 A2

# FIG. 6

# FIG. 7

EP 0 349 807 A2

FIG. 8

EP 0 349 807 A2

# FIG. 9

# FIG. 10

FIG.11

FIG.12

EP 0 349 807 A2